# EUROPEAN PATENT APPLICATION

(11) **EP 3 936 777 A1**
(43) Date of publication of application: **12.01.2022**
(21) Application number: 21184769.4
(22) Date of filing: 09.07.2021
(51) Int. Cl.: F24F 8/10, F24F 13/065, F24F 13/08, F24F 13/10

(54) **AIR CLEANER**

(30) Priority: 10.07.2020 KR 20200085470
(71) Applicant: LG Electronics Inc., Seoul 07336 (KR)
(72) Inventor: LEE, Jongsu, 08592 Seoul (KR); YOON, Juhyup, 08592 Seoul (KR); PARK, Naehyun, 08592 Seoul (KR); PARK, Dongryul, 08592 Seoul (KR); GIM, Yeonghyeon, 08592 Seoul (KR)
(74) Representative: Vossius & Partner Patentanwälte Rechtsanwälte mbB

(57) **Abstract**

The present disclosure relates to an air cleaner. The air cleaner according to an embodiment of the present disclosure includes: a case having a discharge port which is formed on an upper side and is vertically open; a blower fan disposed inside of the case, and causing air inside the case to flow toward the discharge port; a discharge body disposed on an upper side of the case in which the discharge port is formed, and having a discharge passage for guiding air, blown by the blower fan, toward the discharge port; a discharge guider rotatably disposed on an upper side of the discharge body, and having a plurality of grills bent so as to guide air, flowing upward through the discharge passage, in a radially outward direction; and a motor rotating the discharge guider disposed on the discharge body.

## Description

### BACKGROUND OF THE INVENTION

### 1. Field of the invention

The present disclosure relates to an air cleaner, and more particularly to an air cleaner controlling a flow direction of air discharged through an annular discharge port.

### 2. Description of the Related Art

An air cleaner is a device for filtering air and discharging the filtered air to a room to reduce dust and bacteria in the air of the room. The air cleaner filters out foreign matter by flowing air of a room and discharges air, from which the foreign matter is removed.

Korean Laid-Open Patent Publication No. KR10-2017-0140578 discloses an air cleaner which is vertically disposed to filter a large amount of air. In the air cleaner disclosed in the related art, an air cleaner disposed at a lower position may uniformly discharge air, purified through an annular air passage, in a radial direction. In this case, the purified air may be discharged in a direction toward wall surfaces or corners of a room, in addition to a direction toward the room.

If an air flow is discharged uniformly in all directions, the purified air may be discharged to a space requiring no purification, depending on an arrangement of the air cleaner. Accordingly, it is required to control a wind direction of air discharged from an air cleaner disposed at a lower position.

### SUMMARY OF THE INVENTION

It is an object of the present disclosure to provide an air cleaner for simply controlling a flow direction of discharged air, in which using a simple structure, the air cleaner may change a flow direction of air discharged upward from an annular discharge port.

It is another object of the present disclosure to provide an air cleaner in which by intensively discharging air only to a local area, filtered air may flow in a direction desired by a user.

It is yet another object of the present disclosure to provide an air cleaner allowing air, discharged from a first blower disposed at a lower position, to reach a long distance.

The objects of the present disclosure are not limited to the aforementioned objects and other objects not described herein will be clearly understood by those skilled in the art from the following description.

In accordance with an aspect of the present disclosure, the above and other objects can be accomplished by providing an air cleaner, including: a case having a discharge port which is formed on an upper side and is vertically open; and a fan disposed inside of the case, and causing air inside the case to flow toward the discharge port, such that the air cleaner may flow the air in an upward direction. The air cleaner of the present disclosure may include: a discharge body disposed on an upper side of the case in which the discharge port is formed, and having a discharge passage for guiding air, blown by the fan, toward the discharge port; a discharge guider rotatably disposed on an upper side of the discharge body, and having a plurality of grills bent so as to guide air, flowing upward through the discharge passage, in a radially outward direction; and a motor rotating the discharge guider disposed on the discharge body, such that the air cleaner may flow the upwardly flowing air in one direction.

The discharge body may include: an outer body forming an exterior; and an inner body disposed radially inwardly from the outer body, and forming an annular discharge passage with the outer body, thereby forming an annular passage for flowing the upwardly discharged air.

The plurality of grills may be spaced apart from each other in one direction perpendicular to an up-down direction, and may be bent to one side in the direction in which the plurality of grills are spaced apart from each other, thereby guiding the air discharged through the annular passage in one direction.

The air cleaner may further include a gear rotating while being coupled to the motor, wherein the motor may be mounted in the discharge body. Further, the discharge guider may include a guide rail disposed inside of the inner body and engaged with the gear, such that a wind direction of the air flowing upward through the annular discharge passage may be controlled, and a flow of the air flowing through the discharge passage may not be interrupted.

The guide rail may be formed in a ring shape on a lower surface of the discharge guider.

As the gear, a bevel gear may be used which rotates about a rotation axis perpendicular to a rotation axis of the discharge guider, and has a conical shape, thereby rotating the discharge guider.

The air cleaner may further include a gear rotating while being coupled to the motor, wherein the motor may be mounted on one side of the discharge guider; and the guide rail engaged with the gear may be formed on one side of the discharge body, such that the motor is disposed on the discharge guider, and the guide rail may be formed on the discharge body, thereby rotating the discharge guider.

The air cleaner may further include a divider disposed on an upper side of the discharge body, and extending radially outwardly from the discharge body toward a top, wherein the discharge body may include a fixing body spaced apart inwardly from the inner body and fixed to the divider.

The discharge body may include a connection plate connecting the fixing body and the inner body, wherein the connection plate may be disposed below an upper end of the inner body, thereby providing a space for mounting the guide rail of the discharge guider.

The discharge guider may include a guide rail formed in a ring shape on the lower surface of the discharge guider and engaged with the gear, wherein the guide rail may be disposed to be inserted into a space between the inner body and the fixing body, such that the discharge guider may rotate stably.

The discharge body may include a motor sheet disposed inside of the fixing body, and fixing an arrangement of the motor, such that the motor may be fixed to the discharge body to rotate the discharge guider.

The discharge guider may include: an outer circumferential wall forming an outer circumference; an inner circumferential wall spaced apart radially inwardly from the outer circumferential wall; a plurality of discharge grills disposed between the outer circumferential wall and the inner circumferential wall, and bent so as to change a wind direction of upwardly flowing air; and a lower plate extending radially inwardly from a lower end of the inner circumferential wall, wherein a guide rail, engaged with the gear to guide rotation of the discharge guider, may be formed on a lower surface of the lower plate, such that the discharge guider may be rotated through the lower plate, and the discharge grill may be disposed between the outer circumferential wall and the inner circumferential wall which form an annular shape.

A first bearing, rotating while in contact with one side of the discharge body, may be disposed on an upper surface of the lower plate, thereby inducing the discharge guider to rotate stably.

A stopper, protruding upward from the lower plate and restricting a rotation range of the discharge guider, may be disposed on an upper side of the lower plate, thereby restricting a rotation range of the discharge guider.

The discharge body may include a mounting part extending radially outwardly from an upper end of the outer body, wherein the discharge guider may be partially disposed on an upper side of the mounting part, such that the discharge guider may be rotatably mounted on the upper side of the discharge body.

The mounting part may have a bearing groove in which a second bearing, coming into contact with the outer circumferential wall of the discharge guider, may be disposed, such that the discharge guider disposed on the discharge body may rotate stably.

In accordance with another aspect of the present disclosure, the above and other objects can be accomplished by providing an air cleaner, including: a first blower discharging air to a discharge port formed on an upper side; a second blower disposed over the first blower and discharging air to a discharge port formed on an upper side; and a divider disposed between the first blower and the second blower, and vertically separating the first blower and the second blower, such that the air cleaner may flow the air through the first blower and the second blower.

Further, the first blower disposed at a lower position may include: a case having a discharge port which is formed on an upper side and is vertically open; a fan disposed inside of the case, and causing air inside the case to flow toward the discharge port; a discharge body disposed on an upper side of the case in which the discharge port is formed, and having a discharge passage for guiding air, blown by the fan, toward the discharge port; a discharge guider rotatably disposed on an upper side of the discharge body, and having a plurality of grills bent so as to guide air, flowing upward through the discharge passage, in a radially outward direction; and a motor rotating the discharge guider disposed on the discharge body, thereby inducing the air, discharged upward from the first blower, to flow in one direction.

The divider may include: a guide wall extending rounded in a radial direction; and a lower end fixing wall extending downwardly from the guide wall and coupled to the discharge body, such that the lower end fixing wall may be fixedly disposed in the discharge body, and the air blown by the first blower may be prevented from flowing to the second blower.

The discharge guider may include: an outer circumferential wall forming an outer circumference; an inner circumferential wall spaced apart radially inwardly from the outer circumferential wall; a plurality of discharge grills disposed between the outer circumferential wall and the inner circumferential wall, and bent so as to change a wind direction of upwardly flowing air; and a lower plate extending radially inwardly from a lower end of the inner circumferential wall, wherein a guide rail, engaged with the gear to guide rotation of the discharge guider, may be formed on a lower surface of the lower plate; and a first bearing, rotating while in contact with an outer circumferential surface of the lower end fixing wall, may be disposed on an upper surface of the lower plate, such that the discharge guider disposed on the upper side of the first blower may rotate stably without being in contact with the divider.

A stopper, protruding upward from the lower plate and coming into contact with a portion of components of the divider to restrict a rotation range of the discharge guider, may be disposed on an upper side of the lower plate, such that the divider may restrict a rotation range of the discharge guider.

The air cleaner may further include a circulator movably disposed on an upper side of the second blower and controlling a wind direction of air discharged from the second blower, thereby separately controlling a wind direction of air discharged from the first blower and a wind direction of air discharged from the second blower.

Other detailed matters of the exemplary embodiments are included in the detailed description and the drawings.

### EFFECTS OF THE INVENTION

The air cleaner according to the present disclosure has one or more of the following effects.

Firstly, by using a discharge guider rotatably mounted on the discharge body having a discharge passage which is vertically open, a flow direction of upwardly discharged air may be easily changed.

Further, by providing a motor and a gear in an inner space of the discharge body, and securing a space for mounting a guide rail of the discharge guider above a position where the gear is disposed, a product may be manufactured in a spatially compact manner. Accordingly, by using the discharge guider and a structure for rotating the same, a wind direction of air may be changed without interrupting the flow of air flowing through an annular discharge passage.

Secondly, by providing a discharge guider rotatably which is mounted on the discharge body having a discharge passage guiding an air flow in an upward direction and guides the upwardly flowing air in one direction, a wind direction of the upwardly flowing air may be controlled so that filtered air may flow to an area desired by a user, thereby rapidly improving comfort in a room.

That is, by minimizing an amount of air discharged to a blind spot area in which air purification is not required, purified air may be intensively discharged to an area requiring air purification.

Thirdly, a first blower is disposed under the second blower, such that it is difficult to control a wind direction of air discharged from the first blower. However, in the present disclosure, the annular discharge guider rotates on an upper side of the discharge body, and a plurality of bent grills are disposed, such that the upwardly discharge air may flow a long distance.

Fourthly, by separately controlling a wind direction of air discharged from the first blower and a wind direction of air discharged from the second blower, a user's needs may be satisfied.

The effects of the present disclosure are not limited to the aforesaid, and other effects not described herein will be clearly understood by those skilled in the art from the following description of the appended claims.

### BRIEF DESCRIPTION OF THE DRAWINGS

FIG. 1 is a perspective view of an air cleaner according to an embodiment of the present disclosure.
FIG. 2 is a cross-sectional view of an air cleaner according to an embodiment of the present disclosure.
FIG. 3 is a perspective view of a discharge body, a discharge guider, and a portion of a divider which are coupled to each other, according to an embodiment of the present disclosure.
FIG. 4 is a cross-sectional view of a discharge body, a discharge guider, and a divider which are coupled to each other, according to an embodiment of the present disclosure.
FIG. 5 is a perspective view of a discharge body according to an embodiment of the present disclosure.
FIG. 6 is a perspective view of a discharge guider according to an embodiment of the present disclosure.
FIG. 7 is a perspective view of the other side of the discharge guider according to an embodiment of the present disclosure.
FIG. 8 is a bottom view for explaining an arrangement of a discharge guider, a motor, and a gear according to an embodiment of the present disclosure.
FIG. 9 is a plan view of a discharge guider according to an embodiment of the present disclosure.
FIG. 10 is a perspective view of a discharge guider according to another embodiment of the present disclosure.
FIG. 11 is a perspective view of a discharge guider and a discharge body according to yet another embodiment of the present disclosure.
FIG. 12 is a perspective view of a discharge guider and a discharge body according to still another embodiment of the present disclosure.
FIG. 13A is a diagram illustrating a shape and an arrangement of a plurality of grills of a discharge guider according to an embodiment of the present disclosure.
FIG. 13B is a cross-sectional view of a plurality of grills of a discharge guider according to an embodiment of the present disclosure.
FIG. 13C is a cross-sectional view of a plurality of grills of a discharge guider according to another embodiment of the present disclosure.
FIG. 14 is a diagram illustrating data indicative of a flow of an air cleaner having no discharge guider, in which (a) is a 3D view of a flow as seen from the top when a first blower and a second blower are in operation, (b) is a 3D view of a flow as seen from the side when a first blower and a second blower are in operation, and (c) is a view of a wind direction and a wind speed as seen from the side when a first blower and a second blower are in operation.
FIG. 15 is a diagram illustrating data indicative of a flow of an air cleaner having a discharge guider of the present disclosure, in which (a) is a 3D view of a flow as seen from the top when a first blower and a second blower are in operation, (b) is a 3D view of a flow as seen from the side when a first blower and a second blower are in operation, and (c) is a view of a wind direction and a wind speed as seen from the side when a first blower and a second blower are in operation.

### DETAILED DESCRIPTION OF THE PREFERRED EMBODIMENTS

Advantages and features of the present disclosure and methods of accomplishing the same will be more clearly understood from exemplary embodiments described below with reference to the accompanying drawings. However, the present disclosure is not limited to the following embodiments but may be implemented in various different forms. The embodiments are provided only to complete disclosure of the present disclosure and to fully provide a person having ordinary skill in the art to which the present disclosure pertains with the category of the present disclosure, and the present disclosure will be defined by the scope of the appended claims. Wherever possible, like reference numerals generally denote like elements through the specification.

Hereinafter, embodiments of the present disclosure will be described with reference to the accompanying drawings for explaining an air cleaner.

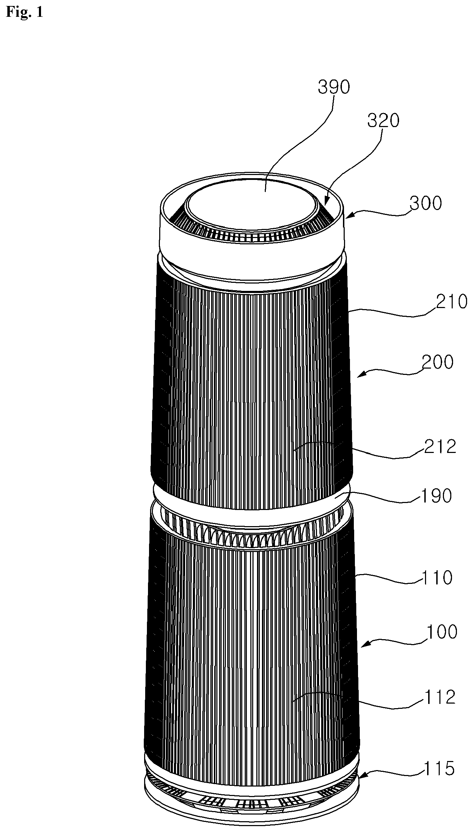

Referring to FIG. 1, an air cleaner 10 according to an embodiment of the present disclosure includes blowers 100 and 200 generating an air flow, and a circulator 300 changing a discharge direction of the air flow generated by the blowers 100 and 200. The blowers 100 and 200 include a first blower 100 generating a first air flow, and a second air blower 200 generating a second air flow.

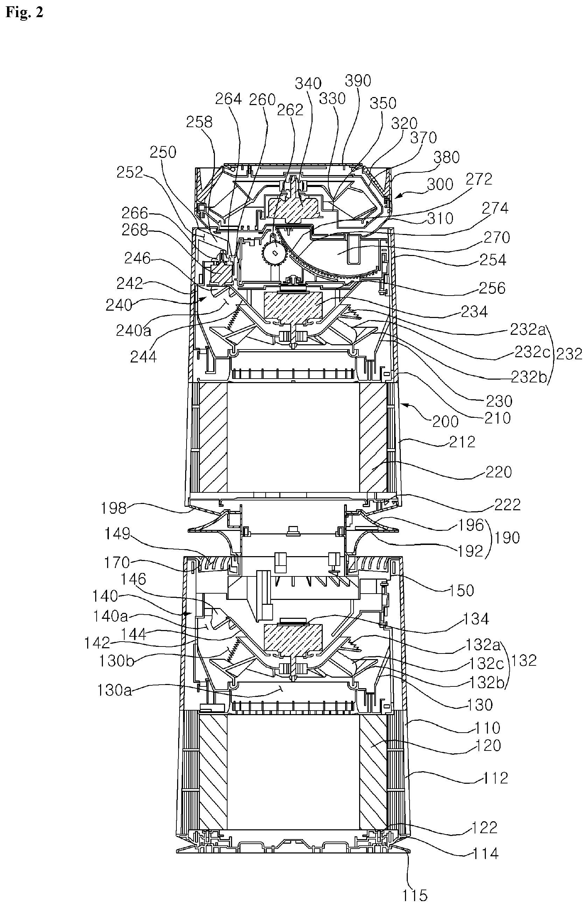

Referring to FIGS. 1 and 2, the first blower 100 and the second blower 200 may be disposed vertically. The second blower 200 may be disposed over the first blower 100.

The air cleaner 10 includes cases 110 and 210 forming the exterior thereof. The cases 110 and 210 include a first case 110 forming the exterior of the first blower 100, and a second case 210 forming the exterior of the second blower 200.

The first case 110 may have a cylindrical shape. An upper portion of the first case 110 may have a diameter which is smaller than a diameter of a lower portion thereof.

The first case 110 may have a first suction port 112, through which air is suctioned. The first suction port 112 may allow the inside and outside of the first case 110 to communicate with each other. A plurality of first suction ports 112 may be formed. The first case 110 may have the plurality of first suction ports 112 formed on a circumference thereof and may have a first discharge port 149 which is open upward.

The plurality of first suction ports 112 may be elongated vertically. The plurality of first suction ports 112 may be formed evenly in a circumferential direction along an outer circumference of the first case 110, so that air may be suctioned in any direction relative to the first case 110.

As described above, the first case 110 has a cylindrical shape, and the plurality of first suction ports 112 are formed along the outer circumference of the first case 110, such that an air suction amount may increase.

Referring to FIG. 2, a discharge guider 170, rotatably disposed in the first discharge port 149 which is open upward, and changing a wind direction of air flowing upward, is provided on an upper side of the first blower 100. The first discharge port 149 having an annular shape is formed on the first case 110. A discharge body 150 having a discharge passage 150a for guiding air, blown upward by a first fan 132, to flow upward, and the discharge guider 170 rotatably disposed in the discharge body 150 and changing a direction of air which is discharged upward, may be disposed on the first case 110.

A first filter 120 may be removably mounted in a mounting space. The first filter 120 has a cylindrical shape, and air may be introduced through an outer circumferential surface of the first filter 120. Impurities, such as fine dust contained in the air, may be filtered out while the air passes through the first filter 120.

As the first filter 120 has a cylindrical shape, air may be introduced in any direction relative to the first filter 120, thereby increasing an air filtering area.

The mounting space may be formed in a cylindrical shape corresponding to the shape of the first filter 120. While being mounted, the first filter 120 may be slidably inserted into the mounting space. By contrast, while being removed, the first filter 120 may be slidably withdrawn from the mounting space.

The first blower 100 includes: a first fan housing 130 disposed above the first filter 120; a first fan 132 rotatably disposed inside the first fan housing 130; and a first fan motor 134 rotating the first fan 132.

The first fan housing 130 has a first housing suction hole 130a having a circular shape and formed at a lower portion thereof, and a first housing discharge hole 130b having a ring shape and formed at an upper portion thereof. The first fan 132 suctions air in an axial direction and discharges the air upwardly in a radial direction.

The first fan 132 includes: a first hub 132a, to which a rotating shaft of the first fan motor 132 as a centrifugal fan motor is coupled; a first shroud 132b spaced apart from the first hub 132a; and a plurality of first blades 132c disposed between the first hub 132a and the first shroud 132b. The first fan motor 134 may be coupled to an upper portion of the first fan 132.

The first blower 100 may further include a first blowing guider 140 coupled to the upper portion of the first fan 132, and guiding the air, having passed through the first fan 132, to flow upward.

The first blowing guider 140 has an annular first air-blowing passage 140a, through which the air discharged from the first fan 132 flows.

The first blowing guider 140 may include: a first blower body 142 having a cylindrical shape and forming an exterior thereof; a bowl-shaped first motor cover 144 which is disposed at a center portion of the first blower body 142 and into which the first fan motor 134 is inserted; and a plurality of first guide vanes 146 which are spaced apart from each other in a circumferential direction on the first air-blowing passage 140a disposed between the first blower body 142 and the first motor cover 144.

The first blowing guider 140 has the annular first air-blowing passage 140a which is formed between the first blower body 142 and the first motor cover 144, and through which the air discharged from the first fan 132 flows.

The plurality of first guide vanes 146 may guide air, discharged from the first fan 132 to the first air-blowing passage 140a, to flow upward. The respective first guide vanes 146 may be formed in a bent plate shape disposed in an upright position close to a vertical direction. The first guide vanes 146 may extend from an outer circumferential surface of the first motor cover 144 to an inner circumferential surface of the first blower body 142. The plurality of first guide vanes 146 may be spaced apart from each other. The plurality of first guide vanes 146 may guide air, introduced into the first air-blowing passage 140a of the first blowing guider 140 after passing through the first fan 132, to flow upward.

The first fan motor 134 may be supported on an upper side the first motor cover 144. Further, a rotating shaft of the first fan motor 134 may extend downwardly from the first fan motor 134 and may pass through a bottom surface of the first motor cover 144 to be coupled to the first hub 132a.

The first blower 100 may further include a base 115 provided under the lower case 110 and placed on the ground. The base 115 may be spaced apart downwardly from a lower end of the first case 110. A base suction part 114 may be formed in the separation space between the first case 110 and the base 115.

The air cleaner 10 includes a divider 190 provided between the first blower 100 and the second blower 200. By providing the divider 190, the second blower 200 may be spaced apart upwardly from the first blower 100.

The divider 190 may separate or block an air flow, generated by the first blower 100, from an air flow generated by the second blower 200. By providing the divider 190, the first and second blowers 100 and 200 may be vertically spaced apart from each other.

A separation space, in which the divider 190 is disposed, is formed between the fist blower 100 and the second blower 200.

The divider 190 includes a guide wall 192, and a separation wall 196 disposed above the guide wall 192. The guide wall 192 extends rounded in the upward direction, and the separation wall 196 extends rounded in the downward direction. The guide wall 192 extends upwardly from the discharge body 150. At least a portion of the guide wall 192 is formed as a curved surface having a predetermined radius of curvature. A PCB device (not shown) may be disposed in the divider 190.

The divider 190 includes a lower end fixing wall 194 extending downwardly from the guide wall 192 and coupled to the discharge body 150. The lower end fixing wall 194 is coupled to an outer circumference of a fixing body 154 of the discharge body 150, which will be described below. The lower end fixing wall 194 may be coupled to the discharge body 150, so as to fix the arrangement of the dividing device 190.

The outer circumference of the lower end fixing wall 194 may come into contact with a first bearing 178 disposed in the discharge guider 170, which will be described below. A coupling part 195 coupled to the fixing body 154 of the discharge body 150, which will be described below, may be disposed on an inner circumference of the lower end fixing wall 194. The coupling part 195 may protrude inwardly from the inner circumference of the lower end fixing wall 194, to pass through a coupling hole 161 of the fixing body 154.

A lower portion 194a of the lower end fixing wall 194 may have a surface parallel to the vertical direction, so as to come into contact with the first bearing 178. An upper portion 194b of the lower end fixing wall 194 may have an inclined surface having a width which increases toward the top in a radially outward direction. The upper portion 194b of the lower rend fixing wall 194 may come into contact with an upper surface of the first bearing 179, thereby restricting an upward movement of the discharge guider 170.

The upper portion 194b of the lower end fixing wall 194 may have a protruding rib (not shown) coming into contact with a stopper 179 of the discharge guider 170, which will be described later, and restricting a rotating range of the discharge guider 170.

The discharge body 150 of the first blower 100 is disposed under the divider 190, and a support plate 198 of the second blower 200 is disposed on the divider 190.

The second blower may further include the support plate 198 supporting the second filter 220 of the second blower 200. The support plate 198 has an approximately annular shape. The support plate is disposed on the separation wall 196.

The support plate 198, having an annular shape, extends from an inner circumference to an outer circumference and is slightly upwardly inclined relative to the axial direction.

The second case 210 may have a cylindrical shape. An upper portion of the second case 210 may have a diameter which is smaller than a diameter of a lower portion thereof. The second case 210 has a second suction port 212, through which air is suctioned. The second suction port 212 is elongated vertically, and a plurality of second suction ports 212 may be formed which are spaced apart from each other in a circumferential direction.

The plurality of second suction ports 212 may be formed evenly along the outer circumference of the second case 210 in the circumferential direction, so that air may be suctioned in any direction relative to the second case 210.

The second blower 200 also includes the second filter 220 disposed on the second filter frame 222, and the same description of the first filter 120 and the first filter frame 122 applies to the second filter 220 and the second filter frame 222.

The second blower 200 includes: a second fan 232 disposed above the second filter 220 and generates an air flow; a second fan motor 234 rotating the second fan; and a second fan housing 230 in which the second fan 232 is disposed. The second fan 232, the second fan motor 234, and the second fan housing 230 may have the same configuration with a similar shape, and may perform the same function, as the first fan 132, the first fan motor 134, and the first fan housing 130 described above. Accordingly, the second fan 232 may be a mixed flow fan, and may include a hub 232a, a shroud 232b, and a plurality of blades 232c, as in the first fan 132.

The second blower 200 may further include a second blowing guider 240 disposed above the second fan 232 and guiding air, having passed through the second fan 232, in an upward direction. The second blowing guider 240 may include: a second blower body 242 having a cylindrical shape and forming the exterior thereof, and a bowl-shaped second motor cover 244 which is disposed at a center portion of the second blower body 242 and into which the second fan motor 234 is inserted, and a plurality of second guide vanes 246 which are spaced apart from each other in the circumferential direction on a second air-blowing passage 240a formed between the second blower body 242 and the second motor cover 244. The second blower body 242, the second motor cover 244, and the plurality of second guide vanes 246 may have the same configuration with a similar shape, and may perform the same function, as the first blower body 142, the first motor cover 144, and the plurality of first guide vanes 146 described above.

A second discharge cover 250, having a second discharge port 252 which is open upward, may be disposed at an upper portion of the second blower 200. The second discharge port 252 may have a ring shape. A second discharge grill 258 which is formed radially from the second discharge port 252 may be disposed in the second discharge cover 250.

Referring to FIG. 2, the second discharge cover 250 may have an outer circumferential surface 254 disposed on an upper portion of the second case 210 and forming a cylindrical edge, a guide base 256 disposed inside of the outer circumferential surface 254, and a plurality of second discharge grills 258 extending radially from the guide base 256 to the outer circumferential surface 254.

The air cleaner 10 includes a moving guider 260 rotatably disposed on the guide base 256 and supporting the arrangement of the circulator 300, and a mover 270 moving along the moving guider 260 and changing an inclination angle of the circulator 300.

The moving guider 260, rotatably disposed on the guide base 256 and supporting the arrangement of the circulator 300, may be disposed on an upper side of the guide base 256. The moving guider 260 is rotatably disposed on the upper side of the guide base 256, and supports the arrangement of the circulator 300.

The guide base 256 may have a disk shape, and the second discharge grill 258 may be disposed around the guide base 256. The moving guider 260 may have a space formed therein, in which a moving gear 262 and a gear motor (not shown) are disposed.

The mover 270 is coupled to the circulator 300 and moves along the moving guider 260. The mover 270 may change an inclination angle of the circulator 300. The mover 270 includes a guide plate 272 which is convex toward the moving guider 260. A gear rail 274 engaged with the moving gear 262 may be formed on the guide plate 272.

The mover 270 is coupled to a lower surface of the circulator 300, thereby partially covering a suction port 310a formed on a lower part of the circulator 300. That is, the mover 270 partially covers the suction port 310a formed on the lower part of the circulator 300, thereby reducing a flow amount of air sucked into the circulator 300.

The moving guider 260 is rotatably disposed on the guide base 256. The moving guider 260 may be disposed at the center of the guide base 256. The moving guider 260 rotates about the center of the guide base 256, and may change a direction in which the circulator 300 faces.

A rack gear 264 may be disposed on a circumference of one side of the moving guider 260.

A pinion gear 266, rotating by being engaged with the rack gear 264, and a motor 268 for driving the pinion gear 266 may be disposed on one side of the second discharge grill 258. The pinion gear 266 and the motor 268 may be disposed on a portion of an area in which the plurality of second discharge grills 258 are disposed.

The second filter 220 may have a cylindrical shape with open top and bottom sides. The second blower 200 further includes a second filter frame 222 forming a mounting space of the second filter 220.

The circulator 300 may be disposed on the upper side of the second blower 200. The circulator 300 may control a wind direction of air discharged upward from the second wind blower 200. The circulator 300 may be disposed parallel or inclined to a plane formed by the second discharge port 252.

The circulator 300 may have a suction port 310a and a discharge port 320a, and may cause filtered air, which is discharged from the second blower 200, to flow a long distance.

The circulator 300 is disposed on the upper side of the second blower 200. An arrangement of the circulator 300 may be changed on the upper side of the second blower 200, and may cause the air, discharged upward by the second blower 200, to flow in a radial direction.

Referring to FIG. 2, the circulator 300 may include: a lower cover 310 forming the suction port; an upper cover 320 forming the discharge port; a blower fan 330 disposed between the lower cover 310 and the upper cover 320 and generating an air flow by rotation; a motor 340 disposed between the blower fan 330 and the lower cover 310, and rotating the blower fan 330; and a motor cover 350 disposed under the blower fan 330 and around the motor 340.

Referring to FIG. 2, the circulator 300 may further include: a supporter 370 disposed between the upper cover 320 and the blower fan 330, and supporting the upper cover 320; an outer cover 380 covering the outside of the upper cover 320; and a display 390 disposed over the supporter 370 and displaying operation or status of the air cleaner 10.

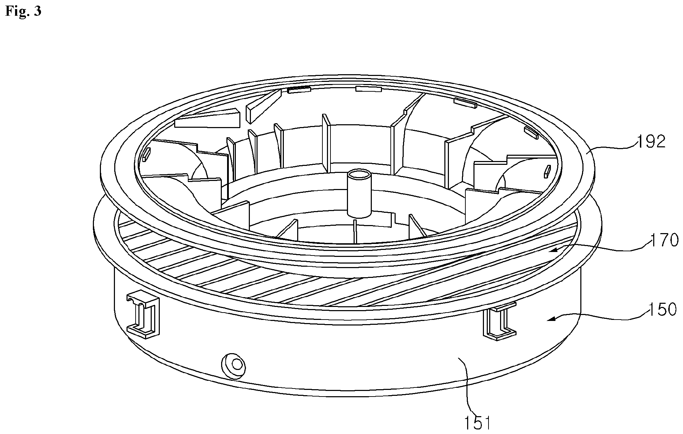

Hereinafter, the discharge body 150, the discharge guider 170, and related components thereof will be described with reference to FIGS. 3 to 13C.

The discharge body 150 is disposed on an open top of the first case 110. The discharge body 150 is disposed inside of the first case 110. The discharge body 150 is disposed above the first blowing guider 140 to guide air, flowing upward by the first blowing guider 140, in an upward direction. The discharge body 150 is disposed at the first discharge port 149 of the first case 110, to guide air flowing upward by the first fan 132.

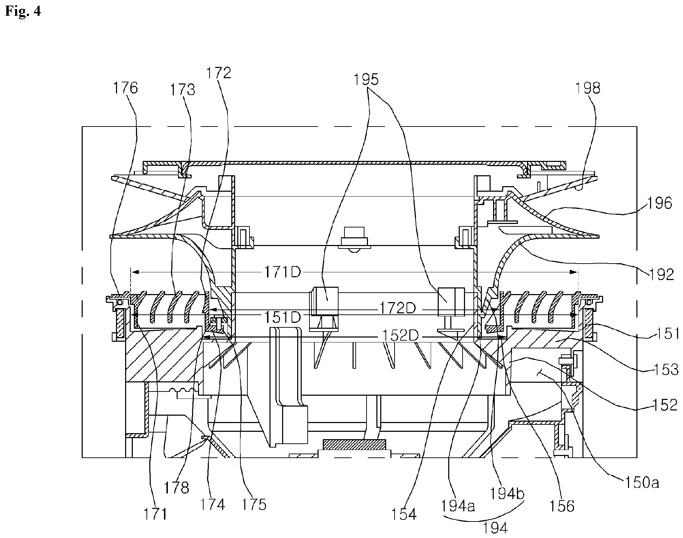

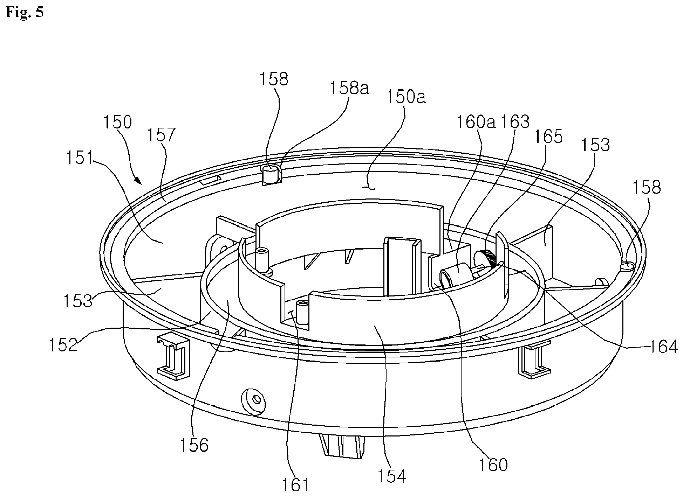

Referring to FIGS. 4 and 5, the discharge body 150 has an annular discharge passage 150a for allowing air, blown upward by the first fan 132, to flow upward. The discharge body 150 includes an outer body 151 and an inner body 152 which form the discharge passage 150a.

Referring to FIG. 5, the outer body 151 has a cylindrical shape and forms an outer circumference of the discharge passage 150a. The outer body 151 may be coupled to an inner circumferential surface of the first case 110 to be fixed thereto. The inner body 152 is spaced apart radially inwardly from the outer body 151. The inner body 152 has a cylindrical shape and forms an inner circumference of the discharge passage 150a.

Referring to FIG. 5, the discharge body 150 includes a mounting part 157 extending radially outwardly from an upper end of the outer body 151. A portion of the discharge guider 170 may be disposed on an upper side of the mounting part 157. An upper plate 176 of the discharge guider 170, which will be described below, may be disposed on the upper side of the mounting part 157. An outer circumferential end of the mounting part 157 may protrude upward so as to prevent the discharge guider 170 from moving outside of a rotation range.

The mounting part 157 has a bearing groove 158a, in which the second bearing 158 coming into contact with the discharge guider 170 is disposed. The bearing groove 158a is recessed downwardly from the mounting part 157. The second bearing 158 is disposed in the bearing groove 158a formed on the mounting part 157. The bearing groove 158a is opened radially inwardly from an upper end of the outer body 151.

Referring to FIG. 5, there may be a plurality of second bearings 158 which are spaced apart from each other in a circumferential direction. Three second bearings 158, which are spaced apart from each other at intervals of 120 degrees, may be disposed in the mounting part 157.

The second bearings 158 are disposed to come into contact with an outer surface of an outer circumferential wall 171 of the discharge guider 170 which will be described later. The second bearings 158 allow the discharge guider 170, rotatably disposed inside of the discharge body 150, to rotate stably.

The inner body 152 has a smaller radius than that of the outer body 151. The discharge passage 150a having an annular shape is formed between the outer body 151 and the inner body 152. An upper end of the inner body 152 is disposed below an upper end of the outer body 151. The discharge guider 170 is disposed on an upper side of the inner body 152.

Referring to FIG. 4, a diameter of the inner circumference of the inner body 152 is greater than a diameter of an outer circumference of an inner circumferential wall 172. The upper end of the inner body 152 may be disposed above a lower end of the inner circumferential wall 172 of the discharge grill 173.

Referring to FIG. 5, a plurality of ribs 153 are disposed between the inner body 152 and the outer body 151. The plurality of ribs 153 may connect the inner body 152 and the outer body 151, such that the inner body 152 and the outer body 151 may support each other.

The plurality of ribs 153 has a vertically extending structure, thereby guiding air flowing upward through the discharge passage 150a. The plurality of ribs 153 having a vertically extending structure do not interrupt the flow of air. The respective ribs 153 may extend in a radial direction, or may be disposed inclined relative to the radial direction.

The discharge body 150 includes the fixing body 154 fixed to the divider 190. The fixing body 154 may be fixed to the lower end fixing wall 194 of the divider 190.

Referring to FIG. 4, the fixing body 154 is spaced apart radially inwardly from the inner body 152. The fixing body 154 extends upward so as to be coupled to a lower part of the guide wall 192. The fixing body 154 may have a cylindrical shape with a smaller radius than that of the inner body 152. An upper end of the fixing body 154 is disposed above the upper end of the inner body 152.

Referring to FIGS. 4 and 5, the discharge body 150 includes a connection plate 156 disposed between the fixing body 154 and the inner body 152 and connecting the fixing body 154 and the inner body 152. The connection plate 156 is disposed below the upper end of the inner body 152. A lower plate 174 of the discharge guider 170, which will be described below, is disposed on an upper side of the connection plate 156.

A motor 163 is fixedly disposed in the discharge body 150. A gear 165, rotating while being coupled to the motor 163, is disposed in the discharge body 150. The gear 165 is disposed to be engaged with a guide rail 175 of the discharge guider 170 which will be described below.

Referring to FIG. 5, the discharge body 150 includes a motor sheet 160, on which the motor 163 is disposed. The motor sheet 160 is disposed inside the fixing body 154. The fixing body 154 has a gear hole 160a, which is formed at a portion where the motor sheet 160 is disposed, and through which a motor shaft 164 extending from the motor 163 and coupled to the gear 165 passes.

The motor 163 and the gear 165 are provided for rotating the discharge guider 170, and may be mounted in the discharge guider 170 in addition to the discharge body 150.

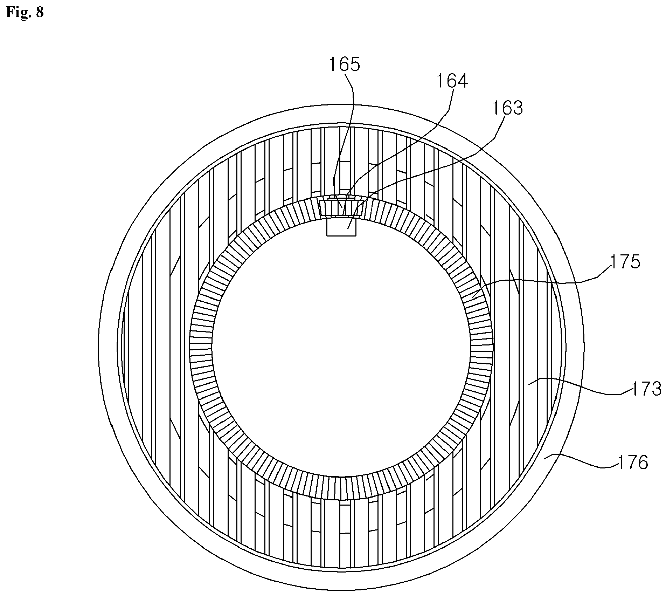

Referring to FIG. 8, as the gear 165, a bevel gear may be used which corresponds to the guide rail 175 formed in a ring shape on a lower surface of the discharge guider 170. The gear 165 is disposed from the bottom of the discharge guider 170 and is engaged with the guide rail 175. As the gear 165, a bevel gear may be used which rotates about a rotation axis perpendicular to a rotation axis of the discharge guider 170, and has a conical shape.

The discharge guider 170 may change a wind direction of air flowing upward through the discharge passage 150a. The discharge guider 170 may cause the air, flowing upward, to flow in a radially upward direction. The discharge guider 170 is rotatably disposed in the discharge body 150. By the rotation of the discharge guider 170, a flow direction of air flowing radially upwardly may be changed by the discharge guider 170.

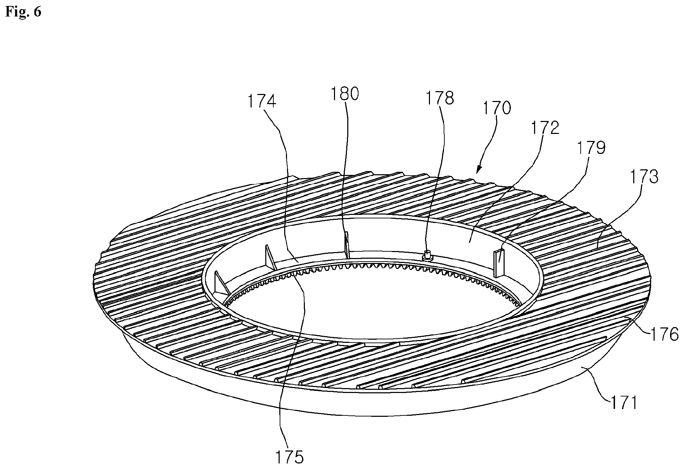

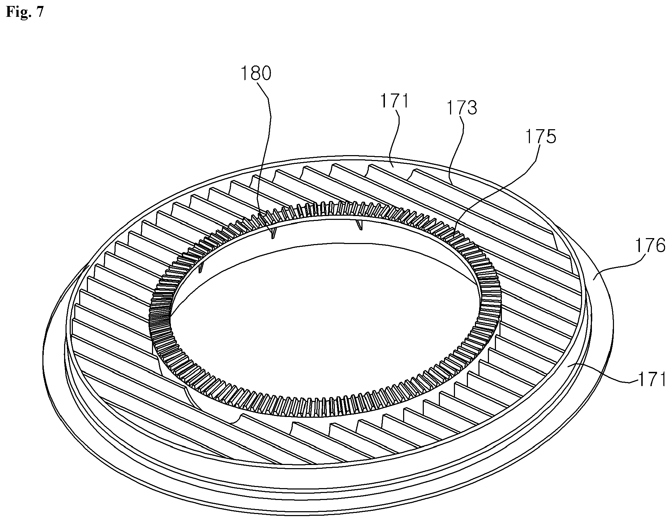

Referring to FIGS. 6 and 7, the discharge guider 170 includes a plurality of discharge grills 173 for changing a wind direction of upwardly flowing air. The plurality of discharge grills 173 are spaced apart from each other in a direction perpendicular to an up-down direction. The plurality of discharge grills 173 may be spaced apart from each other at equal intervals 173d.

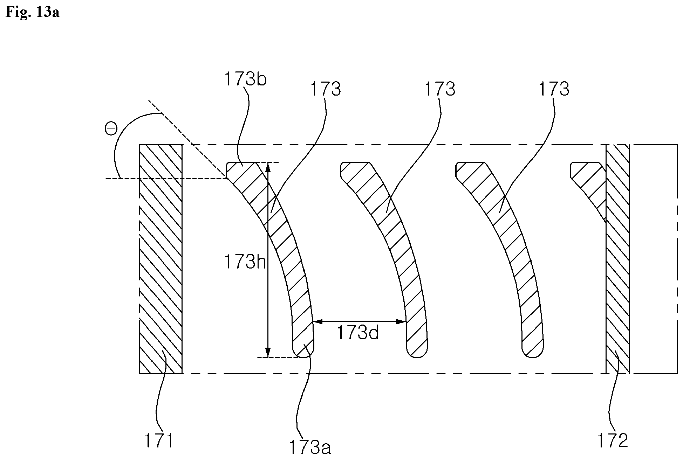

Referring to FIG. 13A, the respective discharge grills 173 may be bent to one side in the direction in which the plurality of discharge grills 173 are spaced apart from each other.

The respective discharge grills 173 are bent in the same direction. The plurality of discharge grills 173 may allow air, flowing upward through the discharge passage 150a, to be discharged in one direction.

Referring to FIG. 13A, the respective discharge grills 173 are disposed so that a leading edge 173a formed at a lower end is directed downwardly, and a trailing edge 173b formed at an upper end is direction upwardly.

A height 173h of the respective discharge grills 173 formed in the up-down direction is greater than the interval 173d, at which the plurality of discharge grills 173 are spaced apart from each other. The interval 173d, at which the plurality of discharge grills 173 are spaced apart from each other, may be 0.6 to 1 times the height 173h of the respective discharge grills 173 formed in the up-down direction.

Referring to FIG. 13A, the respective discharge grills 173 may be spaced apart from each other at equal intervals. A discharge angle θ formed by the trailing edge of the respective discharge grills 173, may be an acute angle. The discharge angle θ, formed by the trailing edge of the respective discharge grills 173, may refer to an angle formed between a virtual straight line, parallel to a direction in which the plurality of discharge grills 173 are disposed, and a virtual straight line extending from an end portion of the trailing edge 173b.

The discharge angle θ, formed by the trailing edge of the respective discharge grills 173, may be in a range of 15 degrees to 30 degrees. The discharge angle θ, formed by the trailing edge of the respective discharge grills 173, may be in a range of degrees being 25 to 30 times a ratio (173d/173h) of the interval 173d, at which the plurality of discharge grills 173 are spaced apart from each other, to the height 173h of the respective discharge grills 173 formed in the up-down direction.

A thickness of the respective discharge grills 173 increases from the leading edge 173a toward the trailing edge 173b. That is, the separation interval 173d of the plurality of discharge grills 173 decreases from the bottom toward the top.

Referring to FIG. 13A, the plurality of discharge grills 173 according to an embodiment of the present disclosure has a shape which is bent radially outward toward the top.

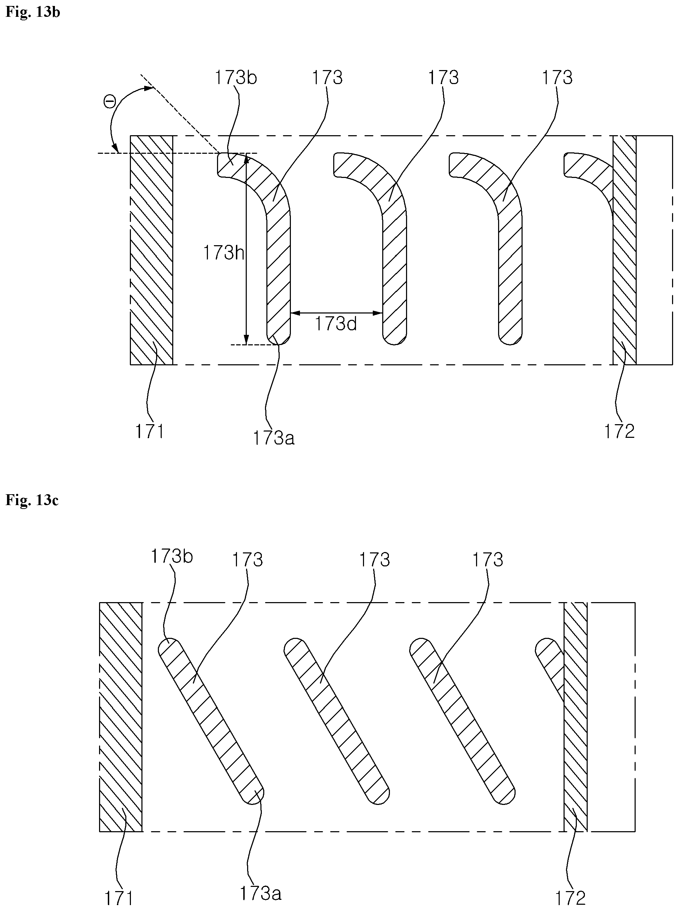

A shape of the plurality of discharge grills 173 may also be changed to induce air, discharged upwardly, to flow radially outwardly of the blower. Accordingly, as illustrated in FIG. 13B, the plurality of discharge grills 173 may be formed with a lower part having a straight line portion extending in the up-down direction, and an upper part bent radially outwardly. Further, as illustrated in FIG. 13C, the plurality of discharge grills 173 may be formed as a straight line surface forming an inclined surface in a radial direction with respect to the up-down direction.

The discharge guider 170 includes the outer circumferential wall 171 forming an outer circumference; the inner circumferential wall 172 spaced apart radially inwardly from the outer circumferential wall 171; and the plurality of discharge grills 173 disposed between the outer circumferential wall 171 and the inner circumferential wall 172, and bent so as to change a wind direction of upwardly flowing air.

Referring to FIG. 4, a diameter 171D, formed by the outer circumference of the outer circumferential wall 171 is smaller than a diameter 151D formed by the inner circumference of the outer body 151.

Referring to FIG. 7, the discharge guider 170 may include the lower plate 174 extending radially inwardly from a lower end of the inner circumferential wall 172, and the upper plate 176 extending radially outwardly from an upper end of the outer circumferential wall 171.

The lower plate 174 is disposed over the connection plate 156 of the discharge body 150. A lower surface of the lower plate 174 is engaged with the gear 165 coupled to the motor 163. The guide rail 175, formed to be engaged with the gear 165, may be formed on the lower surface of the lower plate 174.

Referring to FIG. 7, the guide rail 175 may be formed on the lower surface of the lower plate 174 having a ring shape. The guide rail 175 is engaged with the gear 165, and when the gear 165 rotates by the operation of the motor 163, the discharge guider 170 may rotate.

The lower plate 174 may be disposed below the lower end of the discharge grill 173. The lower plate 174 may be disposed with a portion thereof, on which the guide rail 175 is formed, being inserted into a space between the inner body 152 and the fixing body 154.

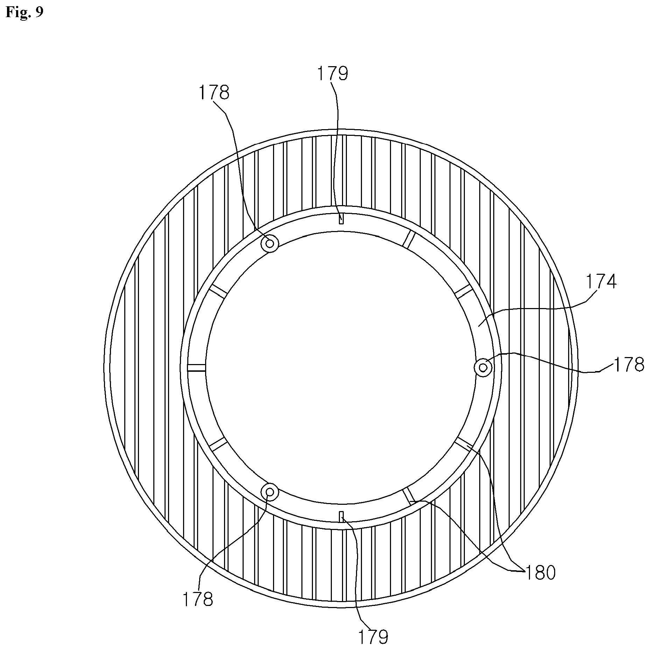

Referring to FIG. 9, the first bearing 178, rotating while in contact with the divider 190 or the discharge body 150, is disposed on an upper side of the lower plate 174. Referring to FIG. 4, the first bearing 178 is disposed to come into contact with the outer circumference of the lower end fixing wall 194 of the divider 190. A plurality of first bearings 178, which are spaced apart from each other in a circumferential direction, may be disposed on the upper side of the lower plate 174. Referring to FIG. 9, three first bearings 178, which are spaced apart from each other at regular intervals in the circumferential direction, may be disposed on the lower plate 174.

A plurality of vertical ribs 180 provided to reinforce rigidity of the discharge guider 170, are formed on the upper side of the lower plate 174. The plurality of vertical ribs 180 are connected to the lower plate 174 and the inner circumferential wall 172, thereby reinforcing the rigidity of the discharge guider 170.

The plurality of vertical ribs 180 are spaced apart from each other in the circumferential direction on the lower plate 174. The plurality of vertical ribs 180 have an approximately triangular shape, and connects the lower plate 174 and the inner circumferential wall 172. The vertical ribs 180 are disposed not to come into contact with the upper side of the lower end fixing wall 194.

The stopper 179, protruding upward from the lower plate 174 and coming into contact with a portion of components of the divider 190 to restrict a rotation range of the discharge guider 170, is disposed on the upper side of the lower plate 174. The stopper 179 may restrict a rotation range of the discharge guider 170. The stopper 179 comes into contact with the protruding rib (not shown) of the lower end fixing wall 194 of the divider 190, to restrict a rotation range of the discharge guider 170.

Referring to FIG. 8, the upper plate 176 extends radially outwardly from the upper end of the outer circumferential wall 171. An upper surface of the upper plate 176 may have a shape continuously extending from the discharge grill 173.

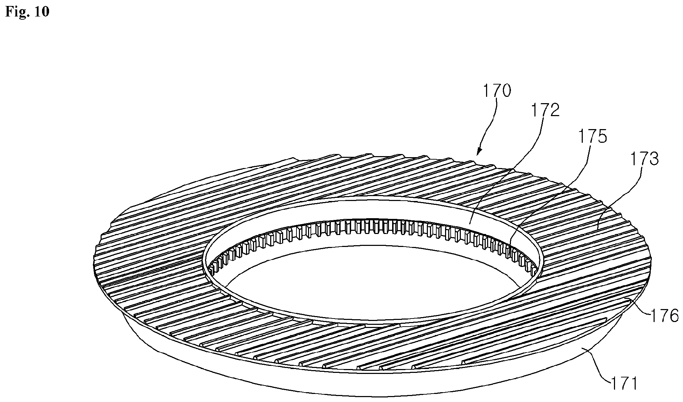

Referring to FIGS. 10 to 12, the arrangement of the motor 163 and the guide rail 175 according to another embodiment of the present disclosure will be described below.

Referring to FIG. 10, the guide rail 175 may be formed on the inner circumferential wall 172 of the discharge guider 170. The guide rail 175 may be formed along the inner surface of the inner circumferential wall 172 of the discharge guider 170. In this case, a motor shaft (not shown) extending from a motor (not shown) may be disposed perpendicular to the discharge body 150. A spur gear may be used as a gear (not shown) coupled to the motor disposed in the discharge body 150.

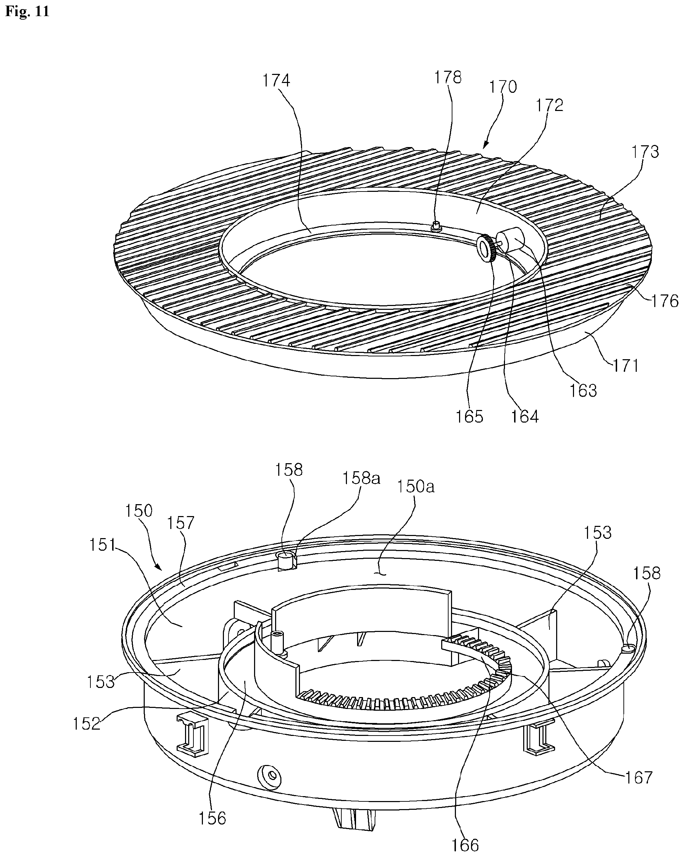

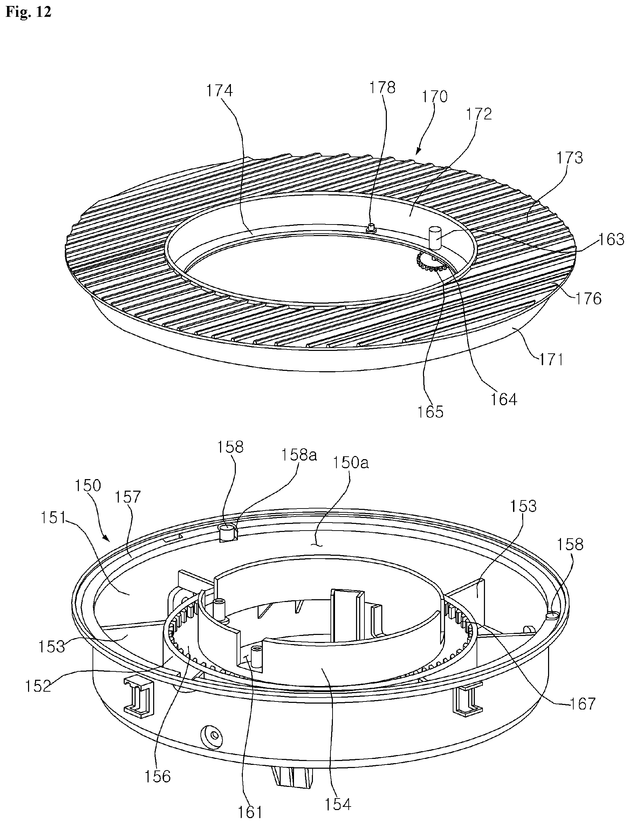

Referring to FIGS. 11 and 12, the motor 163 may be fixedly disposed on the discharge guider 170, and the guide rail 167 may be disposed in the discharge body 150.

Referring to FIG. 11, the discharge body 150 includes an inner plate 166 extending inwardly from an inner circumferential end of the connection plate 156. The guide rail 167 is disposed on an upper surface of the inner plate 166. Referring to FIG. 11, the inner plate 166 may have a semi-ring shape formed at an angle in a range of 180 degrees.

Referring to FIG. 11, the motor 163 may be fixedly disposed on the discharge guider 170. The motor 163 is fixedly disposed on the upper side of the lower plate 174 of the discharge guider 170. A bevel gear may be used as the gear 165 coupled to the motor 163. The motor shaft 164, extending from the motor 163, may be directed toward the center of the discharge guider 170.

Referring to FIG. 12, the guide rail 167 may be formed on the inner circumference of the inner body 152 of the discharge body 150.

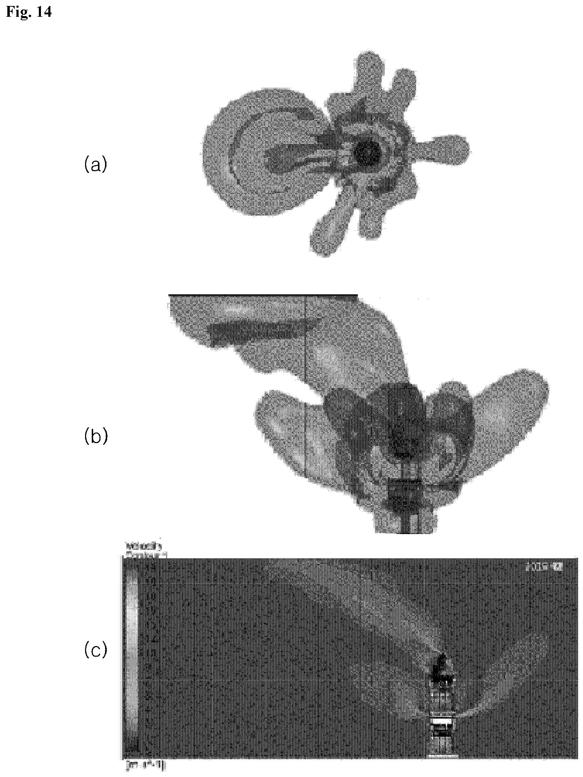

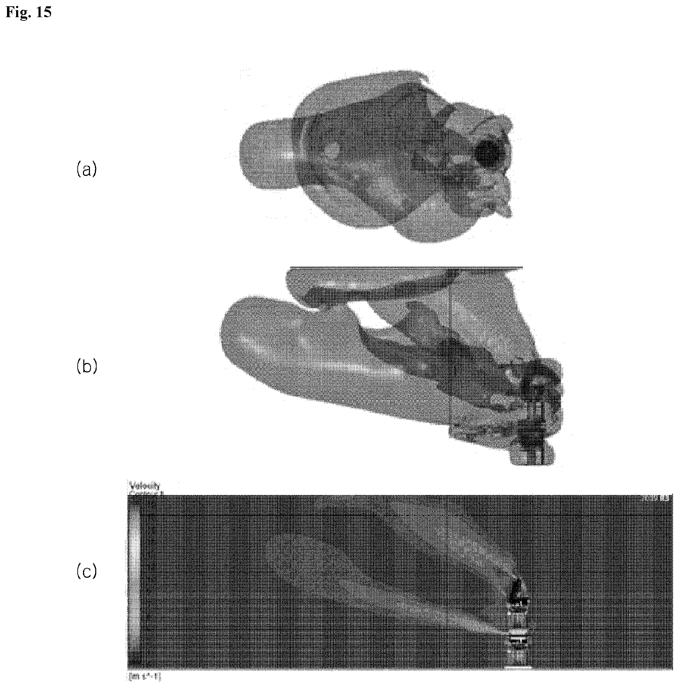

The motor 163 is fixedly disposed on the discharge guider 170, and the motor shaft 164 extending from the motor 163 extends vertically downwardly from the discharge guider 170. The gear 165 fixed to the motor shaft 164 is disposed under the discharge guider 170. Referring to FIG. 12, the motor 163 is fixedly disposed on the upper side of the lower plate 174. The motor shaft 164 extending from the motor 163 extends downwardly by passing through one side of the lower plate 174. The gear 165 is coupled to the motor shaft 164 from the bottom of the lower plate 174. With reference to FIGS. 14 and 15, the following description will be given by comparing an air flow of an air cleaner, having a discharge guider which is rotatably disposed according to an embodiment of the present disclosure; and an air flow of an air cleaner having no discharge guider, as a comparative example to the present disclosure.

Referring to FIG. 14, in the air cleaner having no discharge grill, air discharged from the first blower flows in all directions. In this case, a large amount of air may flow into an area in which air purification is not required, such that an amount of air flowing into an area requiring air purification decreases. Further, it can be seen that an amount of air flowing in a desired direction is relatively small, such that air discharged from the first blower 100 may not flow a long distance.

Referring to FIG. 15, in the air cleaner having the discharge grill of the present disclosure, air discharged from the first blower flows in one direction. In this case, the air discharged from the first blower 100 may flow in the same direction as the air discharged from the second blower 200. A large amount of purified air may be blown to an area requiring air purification, which is desired by a user.

That is, as illustrated in (c) of FIG. 15, the air discharged from the first blower 100 may also reach a long distance in one direction.

## Claims

1. An air cleaner comprising:
a case (110) having a circular cross section and extending in a vertical direction, the case having a discharge port (149) which is formed at an upper side and is vertically open;
a fan (132) disposed inside of the case (110); and
a discharge guider (170) disposed at the discharge port (149), and having a plurality of grills (173) extending in a width of the case and arranged parallel to each other.

2. The air cleaner of claim 1, wherein the grills (173) are tilted with respect to a longitudinal direction of the case (110).

3. The air cleaner of claim 1, or 2, wherein the grills (173) are bent along a first direction perpendicular to the vertical direction and are spaced apart from each other in the first direction.

4. The air cleaner of claim 1, 2, or 3, wherein the grill (173) has a leading edge (173a) forming a lower end of the grill (173) and a trailing edge (173b) forming a upper end of the grill (173), and
wherein a thickness of the trailing edge (173b) is greater than a thickness of the leading edge.

5. The air cleaner of any one of claims 1 to 4, further comprising a discharge body (150) disposed on an upper side of the case (110) and providing a discharge passage (150a) communicating with the discharge port (149),
wherein the discharge guider (170) is disposed on the discharge body (150),
wherein the discharge body (150) comprises:
an outer body (151) defining an outer circumference of the discharge passage (150a); and
an inner body (152) disposed radially inward from the outer body (151), and
wherein the discharge passage (150a) is located between the outer body (151) and the inner body (152) and has an annular shape.

6. The air cleaner of claim 5, further comprising a motor (163) configured to ratate the discharge guider (170),
wherein the discharge guider (170) is configured to be rotated about a rotation axis parallel to the longitudinal direction of the case (110).

7. The air cleaner of claim 6, further comprising a gear (165) rotating while being coupled to the motor (163), wherein:
the motor (163) is mounted in the discharge body (150); and
the discharge guider (170) comprises a guide rail (165) disposed inside of the inner body (152) and engaged with the gear (165).

8. The air cleaner of claim 7, wherein the guide rail (175) is formed in a ring shape on a lower surface of the discharge guider (170).

9. The air cleaner of claim 7 or 8, wherein the discharge guider (170) comprises:
an outer circumferential wall (171) forming an outer circumference of the discharge guider (170);
an inner circumferential wall (172) spaced apart radially inwardly from the outer circumferential wall (171); and
a lower plate (174) extending radially inward from a lower end of the inner circumferential wall (172),
wherein the plurality of discharge grills (173) are disposed between the outer circumferential wall (171) and the inner circumferential wall (172), and
wherein a guide rail (175), engaged with the gear (165) to guide rotation of the discharge guider (170), is formed on a lower surface of the lower plate (174).

10. The air cleaner of any one of claims 5 to 9, wherein the discharge body (150) comprises a mounting part (157) extending radially outwardly from an upper end of the outer body (151),
wherein the discharge guider (170) is partially disposed on an upper side of the mounting part (157).

11. The air cleaner of any one of claims 5 to 10, further comprising a guide wall (192) disposed at an upper side of the discharge body (150) and extending radially outward from the discharge body (150) in an upward direction.

12. The air cleaner of claim 11, wherein the discharge body (150) comprises a fixing body (154) spaced apart inwardly from the inner body (152), and
wherein a lower part of the guide wall (192) is fixed to the fixing body (154).

13. The air cleaner of claim 12, wherein the discharge body (150) comprises a connection plate (156) connecting the fixing body (154) and the inner body (152), and wherein the connection plate (156) is disposed below an upper end of the inner body (152).

14. The air cleaner of claim 12, or 13, further comprising a motor (163) mounted at the discharge body (150) and configured to rotate the discharge guider (170); and
a gear (165) that rotates while being coupled to the motor (163),
wherein the discharge guider (170) comprises a guide rail (175) formed in a ring shape on the lower surface of the discharge guider (170) and engaged with the gear (165),
wherein the guide rail (175) is inserted into a space between the inner body and the fixing body (154).

15. The air cleaner of claim 12, 13, or 14, wherein the discharge body (150) comprises a motor sheet (160) disposed inside of the fixing body (154), and fixing an arrangement of the motor (163).
